# EUROPEAN PATENT APPLICATION

(11) **EP 3 112 902 A1**
(43) Date of publication of application: **04.01.2017**
(21) Application number: 16174229.1
(22) Date of filing: 13.06.2016
(51) Int. Cl.: G01S 17/10, G01S 17/89, G01S 17/93

(54) **SENSOR, SENSOR SYSTEM AND METHOD OF FINDING RANGE**

(30) Priority: 18.06.2015 JP 2015122820
(71) Applicant: Ricoh Company, Ltd., Tokyo 143-8555 (JP)
(72) Inventor: TAKAHASHI, Shu, Tokyo 143-8555 (JP); MASUDA, Koji, Tokyo 143-8555 (JP); ITOH, Masahiro, Tokyo 143-8555 (JP); NIHEI, Yasuhiro, Tokyo 143-8555 (JP); UEDA, Takeshi, Tokyo 143-8555 (JP); OGAWA, Takeshi, Tokyo 143-8555 (JP); TANAKA, Hiroaki, Tokyo 143-8555 (JP); OHSUGI, Shiori, Tokyo 143-8555 (JP)
(74) Representative: Leeming, John Gerard

(57) **Abstract**

A sensor (20) includes a light source (21) to emit a pulse light, a light receiver (202) to receive light, emitted from the light source (21) and reflected from an object, a range information acquisition unit (203) to calculate information of a range to the object based on light emission timing at the light source (21) and light reception timing at the light receiver (202) and a speed of the pulse light emitted from the light source (21), and a pulse controller (24) to control a pulse pattern of the pulse light emitted from the light source (21) based on the range information calculated by the range information acquisition unit (203).

## Description

### BACKGROUND

### Technical Field

This disclosure relates to a sensor, a sensor system, and a method of finding a range to an object by using light.

### Background Art

Sensors to find a range to objects are available for various field applications. Some sensors use a time of flight (TOF) computing to find a range or distance to an object, in which the range can be detected based on a time difference between one time point when a pulse light is emitted from a light source and another time point when light reflected from object is received by a light receiving element, as disclosed in Japanese Translation of PCT International Application Publication No. 2013-538342 and Japanese Translation of PCT International Application Publication No. 2015-501927.

Since these sensors can acquire information of objects existing within a given range as object information, these sensors can be applied to a positional control of vehicles and robots. However, the computation required for acquiring the object information is complex and time-consuming, and thereby the real time computation may not be attained.

### SUMMARY

As one aspect of the present invention, a sensor is devised. The sensor includes a light source to emit a pulse light, a light receiver to receive light, emitted from the light source and reflected from an object, a range information acquisition unit to calculate information of a range to the object based on light emission timing at the light source and light reception timing at the light receiver and a speed of the pulse light emitted from the light source, and a pulse controller to control a pulse pattern of the pulse light emitted from the light source based on the range information calculated by the range information acquisition unit.

As another aspect of the present invention, a method of finding a range to an object is devised. The method includes emitting a pulse light to the object, receiving light reflected from the object, calculating the range to the object based on a time difference between one time point when the pulse light is emitted and another time point when the light reflected from the object is received, and a speed of the emitted pulse light, and controlling a pulse pattern of the pulse light based on information of the range calculated at the calculating step.

As to the above described sensor and method, the range information can be calculated without a complex computation and without degrading a real time computation, and thereby the detection precision can be enhanced and the detection range can be enhanced.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic view of a vehicle mounted with a range sensor according to one or more example embodiments of the present invention;
FIG. 2A is a block diagram of a monitoring apparatus for the vehicle of FIG. 1;
FIG. 2B is a hardware configuration for one or more controllers of for the vehicle of FIG. 1;
FIG. 3 is a block diagram of the range sensor for the vehicle of FIG. 1;
FIG. 4 is a block diagram of a light emission unit of the range sensor for the vehicle of FIG. 1;
FIG. 5 is an example of pulse control signal;
FIG. 6 is an example of light source drive signal
FIG. 7 is a block diagram of a light detection unit of the range sensor for the vehicle of FIG. 1;
FIG. 8 is an example of table correlating pulse and distance information
FIG. 9 illustrates an example of a plurality of ranges settable for the range sensor;
FIG. 10 is a flowchart illustrating the steps of a process of pulse control performed by a pulse controller;
FIG. 11 is a block diagram of an example sound/alarm generator;
FIG. 12 is a flowchart illustrating the steps of another process of pulse control performable by the pulse controller as a variant example; and
FIGs. 13A and 13B are a flowchart illustrating the steps of still another process of pulse control by the pulse controller as another variant example;

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, apparatus or system according to one or more example embodiments of the present invention are described hereinafter.

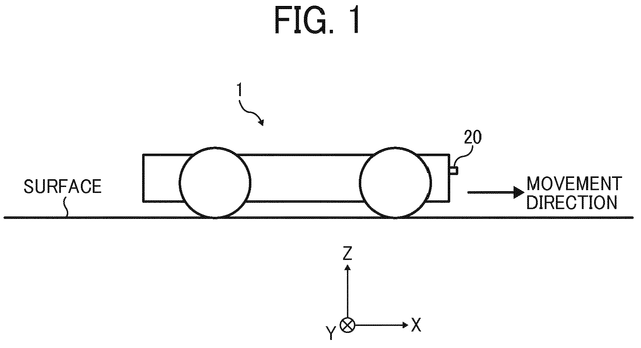

A description is given of one or more example embodiments of the present invention with reference to FIGs. 1 to 11. FIG. 1 is a schematic view of a vehicle 1 mounted with a range sensor 20 such as a time-of-flight (TOF) sensor according to one or more example embodiments. The vehicle 1 is, for example, an unmanned transporter for transporting goods and others to a destination. Further, the vehicle 1 can be a manned vehicle depending on application fields. In this description, the three dimensional rectangular coordinate system "X, Y, Z" is defined by setting a direction perpendicular to a surface as Z-axis direction, and setting the forward direction of the vehicle 1 as +X direction. The vehicle 1 mounted with the range sensor 20 can be used in various fields such a factory, an inventory house or the like, but not limited to these.

The range sensor 20 such as TOF sensor is, for example, disposed at the front end of the vehicle 1 to detect one or more objects existing at the +X direction side of the vehicle 1. In this description, an area or range detectable by the range sensor 20 is referred to a detection range. The range sensor 20 is described as an example of an

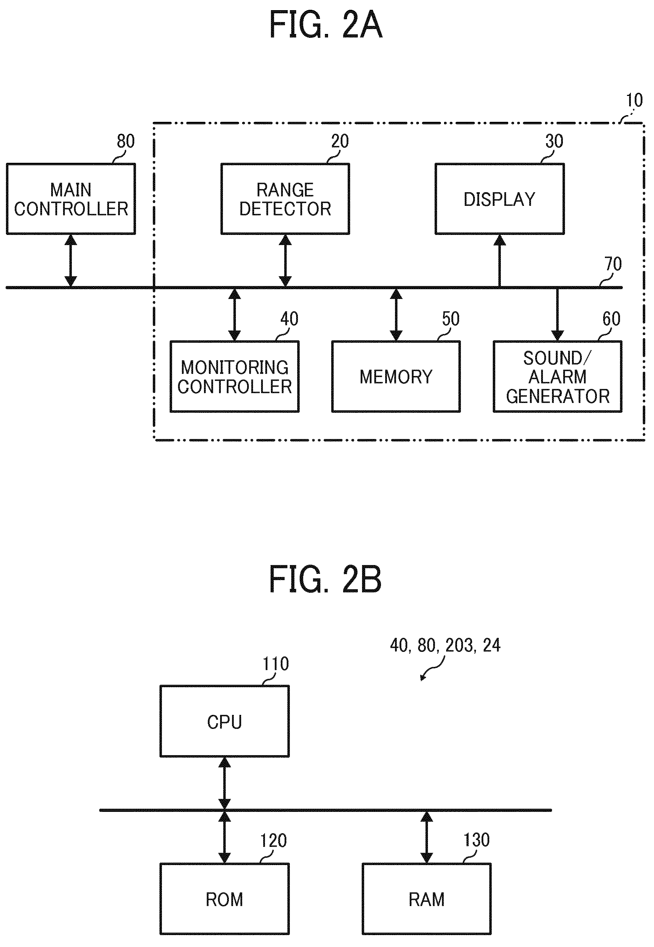

As illustrated in FIG. 2, the vehicle 1 includes, for example, a display 30, a monitoring controller 40, a memory 50, and a sound/alarm generator 60, which are electrically connected with each other via a bus 70 for communicating data.

In this description, a monitoring apparatus 10 can be configured, for example, with the range sensor 20, the display 30, the monitoring controller 40, the memory 50 and the sound/alarm generator 60. Further, the monitoring apparatus 10 can be mounted to the vehicle 1. Further, the monitoring apparatus 10 can be electrically connected with a main controller 80 of the vehicle 1 via wire and/or wirelessly. The monitoring apparatus 10 can be devised as a sensor apparatus or a sensor system. When the monitoring apparatus 10 is devised as the sensor apparatus, the sensor apparatus including the range sensor 20, the display 30, the monitoring controller 40, the memory 50 and the sound/alarm generator 60 can be disposed on the vehicle 1. When the monitoring apparatus 10 is devised as the sensor system, the entire or any one of the display 30, the monitoring controller 40, the memory 50 and the sound/alarm generator 60 configuring the sensor system may not be disposed on the vehicle 1 while the range sensor 20 is disposed on the vehicle 1. As far as the information acquired by the range sensor 20 can be communicated with other units, the entire or any one of the display 30, the monitoring controller 40, the memory 50 and the sound/alarm generator 60 configuring the sensor system may not be required to be disposed on the vehicle 1 but can be disposed separately from the vehicle 1.

The monitoring controller 40 can be used as a controller to control the monitoring apparatus 10, and the monitoring controller 40 can be configured, for example, with a central processing unit (CPU) 110, a read only memory (ROM) 120 and a random access memory (RAM) 130 as illustrated in FIG. 2B. The main controller 80 is used as a controller to control the vehicle 1, and the main controller 80 can be also configured, for example, with the central processing unit (CPU) 110, the read only memory (ROM) 120 and the random access memory (RAM) 130 as illustrated in FIG. 2B.

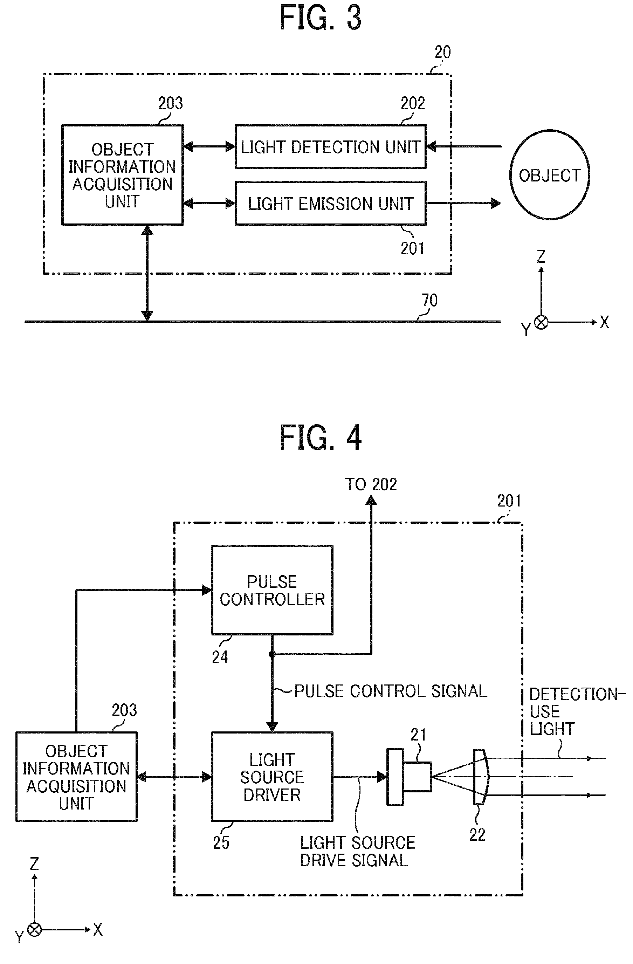

As illustrated in FIG. 3, the range sensor 20 includes, for example, a light emission unit 201, a light detection unit 202, and an object information acquisition unit 203, which are encased in a casing. The casing has a window, which may be attached with a translucent member such as glass, with which light emitted from the light emission unit 201 exits outside the range sensor 20 through the window, and light reflected from an object enters the light detection unit 202 through the window. The range sensor 20 can use various light for detecting the range to an object. For example, the range sensor 20 can use infrared ray, visible range ray, and others depending on application fields. The object information acquisition unit 203 can be also configured, for example, with the central processing unit (CPU) 110, the read only memory (ROM) 120 and the random access memory (RAM) 130 as illustrated in FIG. 2B to communicate signals with other units to calculate range or distance information of objects. The calculation of range or distance information will be described later.

As illustrated in FIG. 4, the light emission unit 201 can be disposed at the - Z side of the light detection unit 202. As illustrated in FIG. 4, the light emission unit 201 includes, for example, a light source 21, a coupling lens 22, a pulse controller 24, and a light source driver 25.

The light source 21 can be turned ON and OFF under the control of the light source driver 25. As illustrated in FIG. 4, the light source 21 can be disposed at a position to emit the light to the +X direction. Hereinafter, a signal generated by the light source driver 25 used for driving the light source 21 is referred to a "light source drive signal" such as a pulse light.

The coupling lens 22 can be disposed at the +X side of the light source 21. By passing the light emitted from the light source 21 through the coupling lens 22, the light can be converted to parallel light or slightly diffused light. In this example case, the coupling lens 22 employs a flat-convex lens, which has a flat face at one side and a convex face at the opposite side of the coupling lens 22 as illustrated in FIG. 4. The light passing through the coupling lens 22 can be used as the light emitted from the light emission unit 201. Further, instead of the coupling lens 22, an optical coupling system including a plurality of optical elements having the same or similar capabilities can be used.

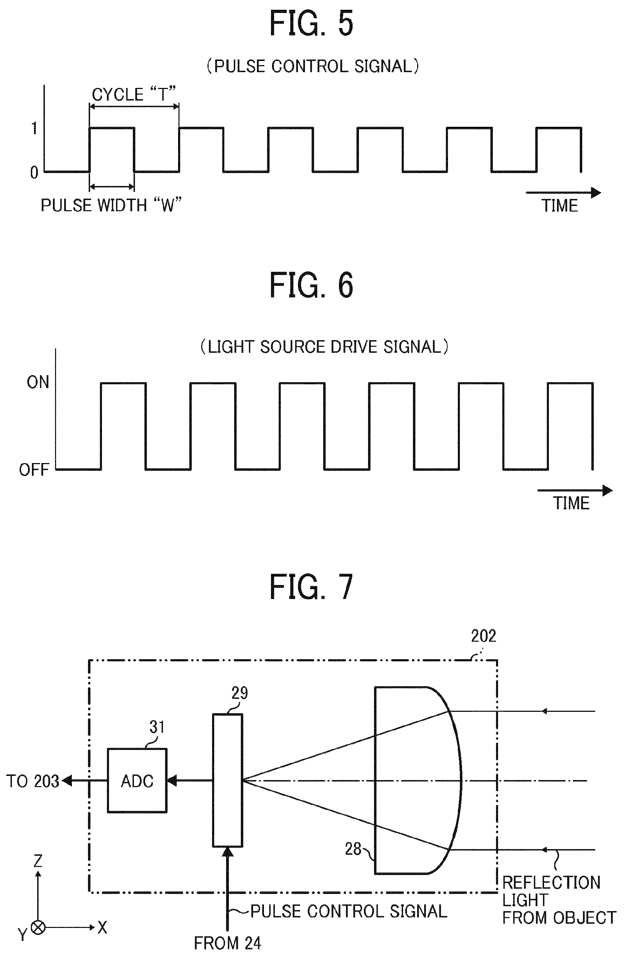

The pulse controller 24 generates a signal (hereinafter, "pulse control signal") for controlling a pulse width "W" (i.e., emission time period) of the pulse light emitted from the light source 21 based on the range or distance information received from the object information acquisition unit 203. The pulse controller 24 can be also configured, for example, with the central processing unit (CPU) 110, the read only memory (ROM) 120 and the random access memory (RAM) 130 as illustrated in FIG. 2B. The pulse controller 24 transmits the pulse control signal to the light source driver 25 and the light detection unit 202. In this description, when the pulse controller 24 outputs a pulse signal having a given pulse width to the light source driver 25 as the pulse control signal, a pulse light having the given pulse width is emitted from the light source 21 (see FIG. 5). The pulse controller 24 can be used as a pulse pattern controller to be described later in detail.

The light source driver 25 generates the light source drive signal (see FIG. 6) based on the pulse control signal received from the pulse controller 24, and the light source driver 25 transmits the light source drive signal to the light source 21 and the object information acquisition unit 203.

Then, the light source 21 emits the pulse light having the pulse width instructed from the pulse controller 24. Hereinafter, the pulse light emitted from the light source 21 may be referred to the "detection-use light."

When the vehicle 1 is being moved, the main controller 80 of the vehicle 1 transmits a request for starting acquisition of object information to the monitoring controller 40. Then, when the vehicle 1 reaches an intended position, the main controller 80 of the vehicle 1 transmits a request for ending acquisition of the object information to the monitoring controller 40.

When the monitoring controller 40 receives the request for starting acquisition of the object information or the request for ending acquisition of the object information, the monitoring controller 40 transmits the request to the object information acquisition unit 203.

When the object information acquisition unit 203 receives the request for starting acquisition of object information from the monitoring controller 40, the object information acquisition unit 203 transmits a request for starting a drive of the light source 21 to the light source driver 25, and a request for starting a pulse control of pulse light emitted from the light source 21 to the pulse controller 24.

When the object information acquisition unit 203 receives the request for ending the acquisition of object information from the monitoring controller 40, the object information acquisition unit 203 transmits a request for ending the driving of the light source 21 to the light source driver 25, and a request for ending the pulse control of the pulse light emitted from the light source 21 to the pulse controller 24.

If an object exists within the detection range of range sensor 20, the light emitted from the range sensor 20 is reflected from the object, and at least a part of the reflection light returns to the range sensor 20. Hereinafter, the light reflected from the object and returned and received by the range sensor 20 may be referred to a "reflection light" from the object.

The light detection unit 202 detects the reflection light from the object. The light detection unit 202 employs, for example, a TOF camera, which is an example of sensors to find the range to objects. As illustrated in FIG. 7, the light detection unit 202 includes, for example, an image forming optical system 28, a light receiving unit 29, and an analog-digital (AD) converter 31.

The image forming optical system 28 is disposed at a position on the light path of the reflection light reflecting from the object to focus the light on the light receiving unit 29. In this example case, the image forming optical system 28 is configured with one lens, but the image forming optical system 28 can be configured with two lenses and three or more lenses, or the image forming optical system 28 can employ a mirror unit.

The light receiving unit 29 receives the reflection light reflected from the object via the image forming optical system 28. The light receiving unit 29 includes a light receiving element such as complementary metal oxide semiconductor (CMOS) image sensor.

The AD converter 31 converts analog signals received from the light receiving unit 29 to digital signals, and outputs the digital signals to the object information acquisition unit 203.

The object information acquisition unit 203 calculates three dimensional information of the object such as two dimensional information of the object along a face perpendicular to the X-axis direction, and the range information of the object in the X-axis direction based on the output signals of the AD converter 31 and the light source drive signal. Since the basic operation of TOF camera and the acquisition method of three dimensional information are known, these are not described in this specification.

Then, the object information acquisition unit 203 outputs the acquired three dimensional information of the object to the pulse controller 24 and the monitoring controller 40.

A description is given of a relationship of range finding capability of the range sensor 20 and the pulse width "W." The range finding capability of the range sensor 20 is related to the pulse width "W" that is the emission time period of the pulse light. Specifically, the smaller the pulse width "W," the higher the distance detection resolution and the higher the measurement precision. However, the smaller the pulse width "W," the shorter the detectable distance due to the effect of aliasing of the pulse light. The aliasing means that reflection light returns at a time point that is longer than a cycle "T" of the pulse light. When the aliasing affects, it cannot determine when the reflection light is received by the range sensor 20. The aliasing effect does not occur if the reflection light is received by the range sensor 20 at a time point within two times of the pulse width "W" of the pulse light.

In view of the aliasing effect, as to one or more example embodiments of the present invention, the range information of the object is fed back to set the suitable pulse width "W" for the pulse light emitted from the light source 21 depending on the information of the range to the object.

For the simplicity of description, it is assumed that the pulse controller 24 controls the pulse width "W" with a plurality patterns such as 50 nsec, 25 nsec, 10 nsec, and 5 nsec. Further, the light-emission duty for each frequency is set, for example, 50 %, and it is configured to that the reflection light can be detected within a phase "2π" of the pulse light. Therefore, in this example case, the cycle "T" of the pulse light can be respectively set with a plurality patterns such as 100 nsec, 50 nsec, 20 nsec, and 10 nsec.

In this example case, the maximum range that can be detected by using the reflection light reflected from the object and received by the light detection unit 202 at a time not exceeding the one cycle "T" of the pulse light can be set as follows. When the pulse width "W" is set 5 nsec (and the cycle "T" is set 10 nsec when the duty is set 50 %), the detectable maximum range is set 1.5 m. When the pulse width "W" is set 10 nsec (and the cycle "T" is set 20 nsec when the duty is set 50 %), the detectable maximum range is set 3 m. When the pulse width "W" is set 25 nsec (and the cycle "T" is set 50 nsec when the duty is set 50 %), the detectable maximum range is set 7.5m. When the pulse width "W" is set 50 nsec (and the cycle "T" is set 100 nsec when the duty is set 50 %), the detectable maximum range is set 15 m.

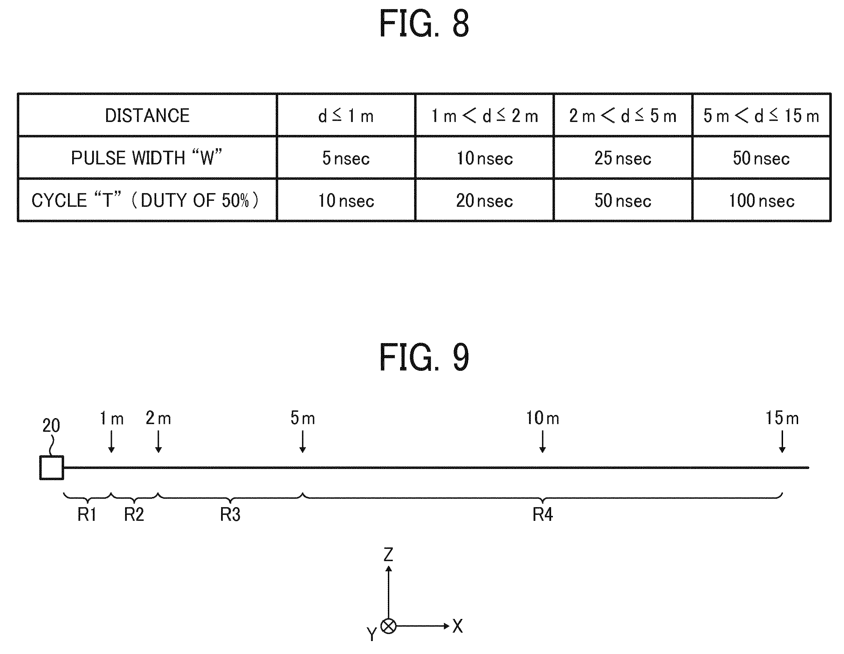

Therefore, as illustrated in FIG. 8, the pulse controller 24 controls the pulse width "W" to 5 nsec when the distance "d" to the object is "d ≤ 1 m," controls the pulse width "W" to 10 nsec when the distance "d" to the object is "1 m < d ≤ 2 m," controls the pulse width "W" to 25 nsec when the distance "d" to the object is "2 m < d ≤ 5 m," and controls the pulse width "W" to 50 nsec when the distance "d" to the object is "5 m < d ≤ 15 m.".

For example, when the vehicle 1 is at a position of "d = 10 m" from the object, the pulse width "W" is set to 50 nsec, and when the vehicle 1 moves at a position of "d = 5 m" from the object, the pulse width "W" is switched to 25 nsec. Further, when the vehicle 1 moves at a position of "d = 2 m" from the object, the pulse width "W" is switched to 10 nsec.

Further, for example, w when the vehicle 1 is at a position of "d = 0.5 m" from the object, the pulse width "W" is set to 5 nsec, and when the vehicle 1 moves at a position exceeding "d = 1 m" from the object, the pulse width "W" is switched to 10 nsec. Further, if the object moves to a position exceeding "d = 2 m" from the object, the pulse width "W" is switched to 25 nsec.

As above described, the pulse controller 24 can set a smaller value for the pulse width "W" when the distance to the object becomes shorter, and can set a greater value for the pulse width "W" when the distance to the object becomes farther.

Further, for the simplicity of description, as to +X direction, as illustrated in FIG. 9, a range that the distance of the object from the range sensor 20 is 1 m or less (d ≤ 1 m) is referred to a first range "R1," a range that the distance of the object from the range sensor 20 is greater than 1m and 2 m or less (1m < d ≤ 2 m) is referred to a second range "R2," a range that the distance of the object from the range sensor 20 is greater than 2 m and 5 m or less (2 m < d ≤ 5 m) is referred to a third range "R3," and a range that the distance of the object from the range sensor 20 is greater than 5 m and 15 m or less (5 m < d ≤ 15 m) is referred to a fourth range "R4".

Therefore, in this example case, the pulse width "W" corresponding to the first range "R1" is set, for example, 5 nsec, the pulse width "W" corresponding to the second range "R2" is set, for example, 10 nsec, the pulse width "W" corresponding to the third range "R3" is set, for example, 25 nsec, and the pulse width "W" corresponding to the fourth range "R4" is set, for example, 50 nsec. Hereinafter, the first to fourth ranges "R1" to "R4" may be collectively referred to the "range information."

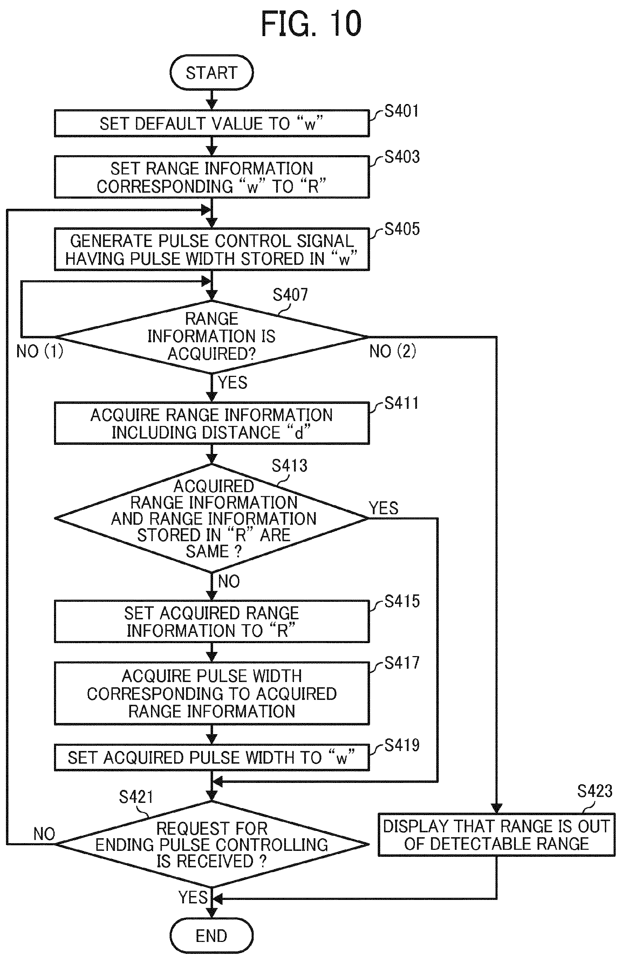

A description is given of a process of controlling the pulse light by using the pulse controller 24 (hereinafter, "pulse controlling process") when the pulse controller 24 receives a request for starting a pulse control from the object information acquisition unit 203 with reference to FIG. 10. FIG. 10 is a flowchart illustrating the steps of a process or algorithm performable by the pulse controller 24, in which it is assumed that an object exists at +X side of the range sensor 20.

At step S401, a default value is set to a variable "w" where the pulse width of the pulse control signal can be stored. For example, 50 nsec is set as a default value. Further, if another range finding apparatus is disposed, the default value can be determined based on a measurement result by another range finding apparatus. Further, if the range or distance to the object is already known, the pulse width corresponding to the already known distance can be set as the default value. At step S401, any value that is suitable for the range detection process can be set to the variable "w" as the default value as required.

At step S403, the range information corresponding the pulse width stored in the variable "w" is set to a variable "R" to store the range information corresponding to the pulse width of the pulse control signal. For example, if the default value of the variable "w" is set with 50 nsec at step S401, the variable "R" is set with "R4" at step S403 based on the information indicated in FIGs. 8 and 9.

At step S405, the pulse controller 24 generates a pulse control signal having the pulse width stored in the variable "w." Then, the pulse controller 24 transmits the pulse control signal to the light source driver 25 and the light detection unit 202. Then, the light source driver 25 drives the light source 21 to emit the pulse light having the pulse width stored in the variable "w."

At step S407, the pulse controller 24 determines whether the pulse controller 24 receives or acquires the range information from the object information acquisition unit 203. If the pulse controller 24 does not yet receive the range information (step S407: NO(1)), the pulse controller 24 waits to receive the range information. If the pulse controller 24 receives the range information (step S407: YES), the sequence proceeds to step S411.

At step S411, the pulse controller 24 calculates the range information corresponding to the distance "d" acquired at step S407. For example, if the distance "d" acquired at step S407 is "10 m," the pulse controller 24 acquires the range information "R4," and if the distance "d" acquired at step S407 is "5 m," the pulse controller 24 acquires the range information "R3."

At step S413, the pulse controller 24 determines whether the acquired range information and the range information stored in the variable "R" are the same information. If the acquired range information and the range information stored in the variable "R" are not the same information (step S413: NO), the sequence proceeds to step S415.

At step S415, the pulse controller 24 sets the acquired range information to the variable "R," in which the pulse controller 24 updates the contents of the variable "R".

At step S417, the pulse controller 24 calculates a pulse width corresponding to the acquired range information. For example, if the acquired range information is "R3," the pulse controller 24 acquires 25 nsec, and if the acquired range information is "R2," the pulse controller 24 acquires 50 nsec.

At step S419, the pulse controller 24 sets the acquired pulse width to the variable "w," in which the pulse controller 24 updates the contents of the variable "w."

At step S421, the pulse controller 24 determines whether a request for ending the pulse control is received. If the request for ending the pulse control is not received (step S421: NO), the sequence returns to step S405.

Further, if the pulse controller 24 waits to receive the range information but the pulse controller 24 does not receive the range information for a given time or more (step S407: NO(2)), the sequence proceeds to step S423. Further, if the range information acquired at step S407 is determined abnormal such as the acquired range information exceeds the maximum detectable distance, the sequence also proceeds to step S423.

At step S423, the pulse controller 24 determines that the range information is not acquired due to some reasons. In this case, for example, the pulse controller 24 instructs to display that the range is out of the detectable range, and ends the pulse control processing.

Further, if the acquired range information and the range information stored in the variable "R" are the same information (step S413: YES), the sequence proceeds to step S421, in which the contents of the variable "w" is not updated.

Further, if the request for ending the pulse control is received (step S421: YES), the pulse controller 24 ends the pulse controlling process.

A description is returned to the monitoring controller 40 with reference to FIG. 2. When the monitoring controller 40 receives three dimensional information of the object from the object information acquisition unit 203, the monitoring controller 40 can refer to a plurality of three dimensional information that is acquired most recently, and then the monitoring controller 40 calculates movement information of the object such as relative movement direction and relative movement velocity of the object with respect to the vehicle 1. Then, the monitoring controller 40 displays the three dimensional information and the movement information of the object with respect to the vehicle 1 on the display 30. Further, the monitoring controller 40 outputs the three dimensional information and the movement information of the object with respect to the vehicle 1 to the main controller 80 of the vehicle 1.

The main controller 80 of the vehicle 1 can control a position of the vehicle 1 relative to the object based on the three dimensional information and the movement information of the object with respect to the vehicle 1 received from the monitoring controller 40.

Further, the monitoring controller 40 can determine whether a dangerous event such as a collision to other objects is expected to occur based on the three dimensional information and the movement information of the object with respect to the vehicle 1. If the monitoring controller 40 determines that the dangerous event is expected to occur, the monitoring controller 40 reports danger-expecting information to the main controller 80 of the vehicle 1, and the sound/alarm generator 60.

If the main controller 80 of the vehicle 1 receives the danger-expecting information from the monitoring controller 40, the main controller 80 can perform an evasive action, which can be set in advance.

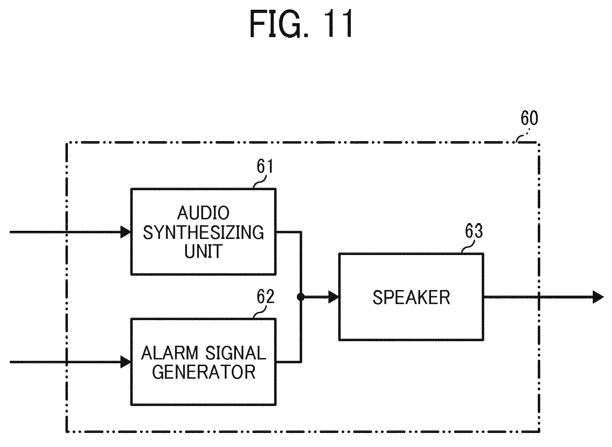

As illustrated in FIG. 11, the sound/alarm generator 60 includes, for example, an audio synthesizing unit 61, an alarm signal generator 62, and a speaker 63.

The audio synthesizing unit 61 stores a plurality of audio or sound data. When the audio synthesizing unit 61 receives the danger-expecting information from the monitoring controller 40, the audio synthesizing unit 61 selects audio data corresponding to the received danger-expecting information, and outputs the corresponding audio data to the speaker 63, and the speaker 63 outputs audio corresponding to the audio data.

When the alarm signal generator 62 receives the danger-expecting information from the monitoring controller 40, the alarm signal generator 62 generates a corresponding alarm signal, and outputs the alarm signal to the speaker 63, and then the speaker 63 outputs audio corresponding to the alarm signal.

As to the above described one or more example embodiments, the light detection unit 202 can be used as the light receiver of the range sensor 20, and the object information acquisition unit 203 can be used as the range information acquisition unit of the range sensor 20. Further, the pulse controller 24 can perform a range finding method of one or more example embodiments of the present invention.

As to the above described one or more example embodiments of the present invention, the range sensor 20 includes, for example, the light emission unit 201, the light detection unit 202, and the object information acquisition unit 203. The light emission unit 201 includes, for example, the light source 21, the coupling lens 22, the pulse controller 24, and the light source driver 25.

The object information acquisition unit 203 calculates the distance or range to the object using, for example, the TOF calculation method. Specifically, the object information acquisition unit 203 calculates the range to the object based on a time difference of one time point when the pulse light is emitted from the light source 21 and another time point when the light reflected from the object is detected by the light detection unit 202, and the speed of the pulse light.

Based on the range information received from the object information acquisition unit 203, the pulse controller 24 can control a pulse width of the pulse light to be emitted from the light source 21.

In the above described example configuration, the object information acquisition unit 203 uses one pulse of the pulse light when the range to the object is computed. Therefore, the range information can be calculated without a complex computation and without degrading a real time computation. As to conventional methods, the complex computation may be required and/or the real time computation may not be performed.

Further, when the distance or range to the object from the range sensor 20 becomes closer, the pulse controller 24 sets a smaller pulse width for the pulse light (i.e., emission time period), and when the distance or range to the object from the range sensor 20 becomes farther, the pulse controller 24 sets a greater pulse width for the pulse light (i.e., emission time period). Therefore, the pulse light can be emitted from the light source 21 with a suitable pulse width depending on the range to the object, with which the detection precision can be enhanced, and the detection range can be enhanced.

Since the monitoring apparatus 10 includes the range sensor 20, the monitoring can be performed with higher precision.

In the above described example embodiment, the pulse controller 24 controls the pulse width of the pulse light emitted from the light source 21 based on one range information acquired most recently at one time point, but not limited hereto.

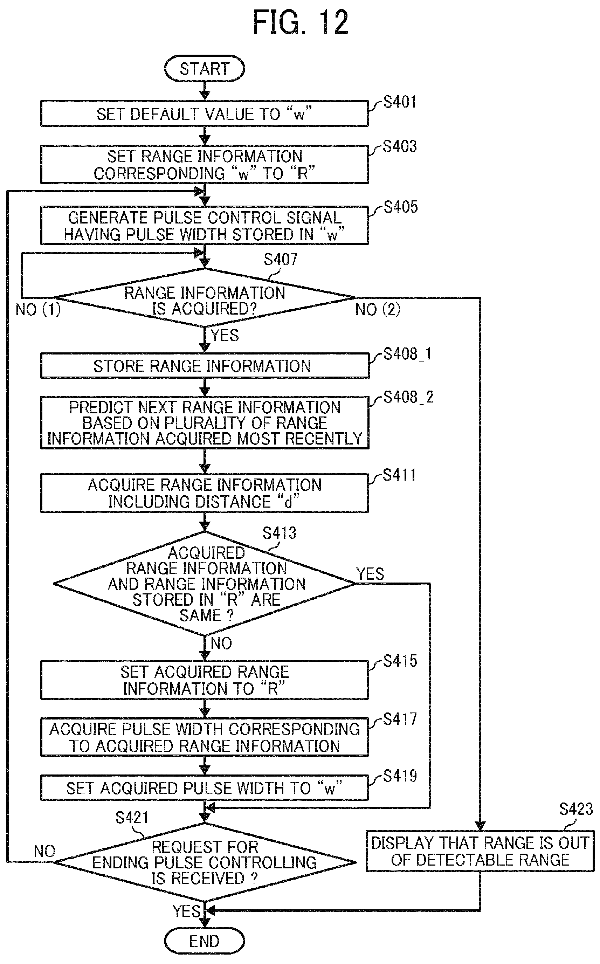

For example, the pulse controller 24 can predict next range information based on a plurality of range information acquired most recently, and control the pulse width of the pulse light based on a prediction result. FIG. 12 is a flowchart illustrating the steps of a process of pulse controlling using the prediction result based on the plurality of range information. The plurality of range information acquired most recently can be acquired by detecting range information at a plurality of most recent time points.

The flowchart of FIG. 12 includes steps S408_1 and S408_2 between steps S407 and S409, which is different from the flowchart of FIG. 10.

At step S408_1, the range information transmitted from the object information acquisition unit 203 is stored in a memory such as the memory 50, in which the memory stores a plurality of range information acquired in time series.

At step S408_2, the pulse controller 24 calculates the relative movement velocity and acceleration of the object with respect to the vehicle 1 based on the plurality of range information stored in the memory most recently, and predicts next range information, in which a predicted next range information is referred to the distance "d" in FIG. 12.

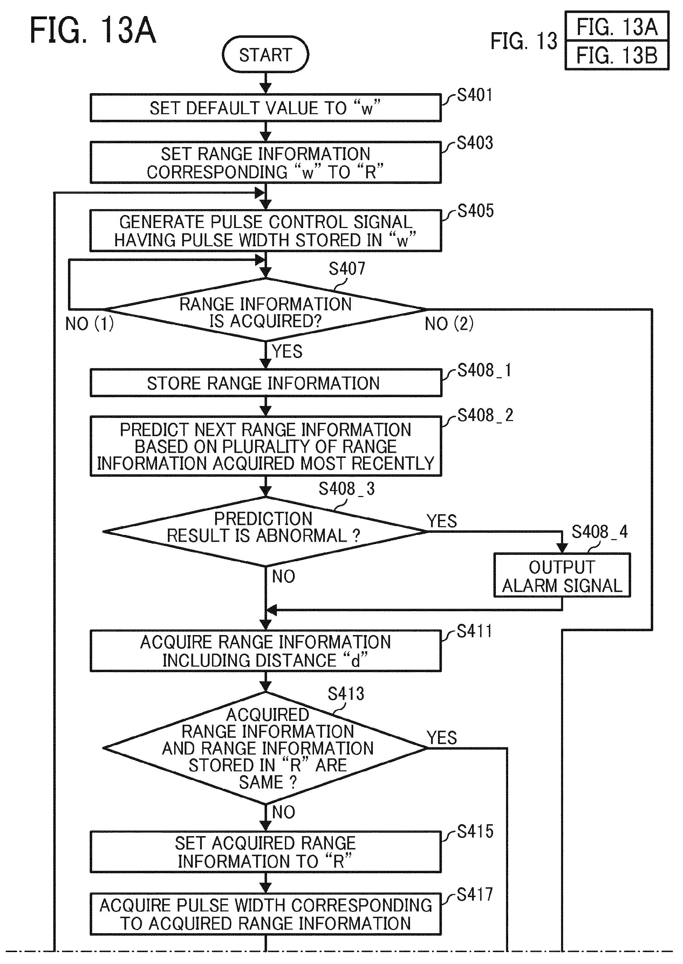

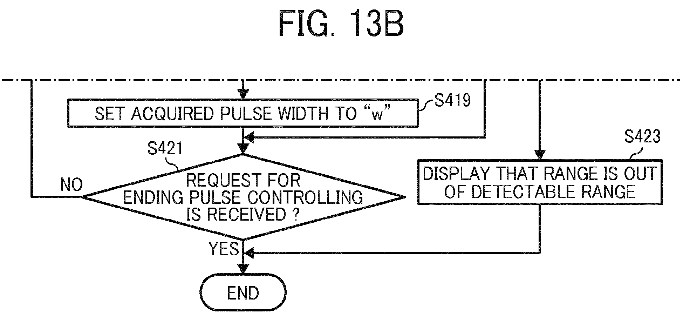

Further, the flowchart can be modified as illustrated in FIGs. 13A and 13B, in which the pulse controller 24 determines whether abnormality occurs to the range sensor 20 based on the prediction result (step S408_3). The abnormality means that the detected range has irregularities such as a first range detected for one frame and a second range detected for the next frame have a discrepancy greater than a pre-set threshold, in which a change level of the detected range is determined. If the abnormality of the range sensor 20 is detected (step S408_3: YES), the pulse controller 24 outputs an alarm signal (step S408_4). Specifically, the pulse controller 24 outputs the alarm signal to the monitoring controller 40 via the object information acquisition unit 203.

When the monitoring controller 40 receives the alarm signal, the monitoring controller 40 reports the abnormality of the range sensor 20 to the main controller 80 of the vehicle 1, and the sound/alarm generator 60. When the sound/alarm generator 60 receives the abnormality of the range sensor 20 from the monitoring controller 40, the sound/alarm generator 60 outputs a given audio such as an alarm sound. When the main controller 80 of the vehicle 1 receives the abnormality of the range sensor 20 from the monitoring controller 40, the main controller 80 performs a given process set for the abnormality situation in advance.

Further, as to one or more example embodiments of the present invention, the pulse controller 24 sets the pulse width "W" of the pulse light, which is the emission time period, to 50 nsec, 25 nsec, 10 nsec, and 5 nsec, but not limited hereto. The pulse width "W" of the pulse light can be set with any values as required.

Further, as to one or more example embodiments of the present invention, the pulse controller 24 sets the pulse width with four types of pulse width but not limited hereto. For example, the pulse controller 24 can set the pulse width with any values such as six types of the pulse width as required.

Further, as to one or more example embodiments of the present invention, the light-emission duty is set 50 %, but not limited hereto. For example, the light-emission duty can be set with any values such as 30 % as required

Further, as to one or more example embodiments of the present invention, the maximum detectable range of the object is set 15 m, but not limited hereto. The maximum detectable range of the object can be set with any values as required.

Further, as to one or more example embodiments of the present invention, the light receiving unit 29 acquires the three dimensional information of the object, but not limited hereto. For example, it may be sufficient if the light receiving unit 29 can acquire information of at least distance or range to the object.

Further, as to one or more example embodiments of the present invention, a part of the processing performed by the object information acquisition unit 203 can be performed by the monitoring controller 40, or a part of the processing performed by the monitoring controller 40 can be performed by the object information acquisition unit 203.

Further, as to one or more example embodiments of the present invention, the AD converter 31 can be integrated with the light receiving unit 29, or can be integrated with the object information acquisition unit 203.

Further, as to one or more example embodiments of the present invention, a part of the processing performed by the object information acquisition unit 203 can be performed by the light receiving unit 29, or a part of the processing performed by the light receiving unit 29 can be performed by the object information acquisition unit 203.

Further, as to one or more example embodiments of the present invention, the monitoring apparatus 10 includes one range sensor, but not limited hereto. For example, the monitoring apparatus 10 can include a plurality of the range sensors such as TOF sensors depending on sizes of vehicles and a monitoring range.

Further, as to one or more example embodiments of the present invention, the range sensor 20 is used for the monitoring apparatus 10 that monitors the travel direction of the vehicle, but not limited hereto. For example, the range sensor 20 can be used for monitoring apparatuses that monitor the rear and/or sides of the vehicle.

Further, as to one or more example embodiments of the present invention, the range sensor 20 can be applied to the sensor systems or sensor apparatuses not mounted to the vehicles, in which the monitoring controller 40 can output alarm information matched to application fields of the sensor systems or sensor apparatuses.

Further, as to one or more example embodiments of the present invention, the range sensor 20 and the sensor system used for the vehicle 1 may include a plurality of controllers to perform the above described processing as above described with reference to drawings but not limited hereto. For example, the range sensor 20 and the sensor system used for the vehicle 1 may include at least one controller that can perform the above described processing.

Further, the range sensor 20 can be applied to various apparatuses other than the sensor system and sensor apparatuses. For example, the range sensor 20 can be applied to a range finding apparatus and a shape measurement apparatus.

As to the above described range sensor, the range information can be calculated without a complex computation and without degrading a real time computation, and thereby the detection precision can be enhanced and the detection range can be enhanced.

As described above, the present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. A sensor (20) comprising:
a light source (21) to emit a pulse light;
a light receiver (202) to receive light, emitted from the light source (21) and reflected from an object;
a range information acquisition unit (203) to calculate information of a range to the object based on light emission timing at the light source (21) and light reception timing at the light receiver (202) and a speed of the pulse light emitted from the light source (21); and
a pulse controller (24) to control a pulse pattern of the pulse light emitted from the light source (21) based on the range information calculated by the range information acquisition unit (203).

2. The sensor (20) of claim 1, wherein the pulse controller (24) controls the pulse pattern of the pulse light based on one range information calculated most recently as the calculated range information.

3. The sensor (20) of claim 1, wherein the pulse controller (24) predicts next range information based on a plurality of range information calculated most recently as the calculated range information, and controls a pulse pattern of the pulse light based on a prediction result of the next range information.

4. The sensor (20) of any one of claims 1 to 3, wherein the pulse controller (24) sets a smaller pulse width for the pulse light when the range to the object becomes closer, and sets a greater pulse width for the pulse light when the range to the object becomes farther.

5. A sensor system comprising:
the sensor (20) of any one of claims 1 to 4; and
a monitoring controller (40) to calculate relative movement information of the object based on an output of the sensor (20).

6. The sensor system of claim 5, wherein the monitoring controller (40) determines whether a dangerous event is expected to occur based on the relative movement information of the object.

7. A method of finding a range to an object, comprising:
emitting a pulse light to the object;
receiving light reflected from the object;
calculating the range to the object based on a time difference between one time point when the pulse light is emitted and another time point when the light reflected from the object is received, and a speed of the emitted pulse light; and
controlling a pulse pattern of the pulse light based on information of the range calculated at the calculating step.

8. The method of claim 7, wherein the controlling step controls the pulse pattern of the pulse light based on one range information calculated most recently.

9. The method of claim 7, further comprising:
predicting next range information based on a plurality of range information calculated most recently before performing the controlling step, and the controlling step controls the pulse pattern of the pulse light based on a prediction result of the next range information.
